# FASCICULE DE BREVET EUROPEEN

(11) **EP 0 605 324 B1**
(45) Date de publication et mention de la délivrance du brevet: **07.03.2001**
(21) Numéro de dépôt: 93403197.2
(22) Date de dépôt: 28.12.1993
(51) Int. Cl.: B60H 1/00, H01H 25/06, B60K 37/06

(54) **Tableau de commande de chauffage ou climatisation de véhicule**
Steuertafel für Fahrzeug-Heizung oder -Klimaanlage
Control board for vehicle heating or air conditioning

(30) Priorité: 28.12.1992 FR 9215792
(43) Date de publication de la demande: 06.07.1994
(73) Titulaire: VALEO CLIMATISATION, 78321 La Verrière (FR)
(72) Inventeur: Petit, Thierry, F-78180 Montigny-le-Bretonneux (FR)

(56) Documents cités:
- EP-A- 0 129 662
- DE-A- 1 575 592
- DE-A- 3 640 608
- DE-A- 3 737 087

## Description

L'invention concerne un tableau de commande pour dispositif de chauffage/ventilation ou de climatisation de véhicule automobile, comprenant au moins un bouton rotatif pour le réglage d'un paramètre de fonctionnement du dispositif et au moins un bouton-poussoir pour le passage discontinu d'une condition de fonctionnement à une autre.

FR-A-2 664 540 décrit un tel tableau de commande comprenant notamment deux boutons rotatifs agissant respectivement sur la distribution de l'air dans l'habitacle et sur le réglage de la température de l'air, et un bouton-poussoir pour la mise en service et hors service du compresseur d'un circuit de climatisation.

Dans ce tableau de commande connu, le bouton poussoir est situé à l'extérieur du périmètre des deux boutons rotatifs. Les surfaces occupées sur le tableau par les trois boutons s'ajoutent donc.

On souhaite fréquemment que l'encombrement en surface des organes de commande, et en particulier du tableau de commande de chauffage ou de climatisation, sur la planche de bord du véhicule soit le plus réduit possible.

DE-A-3 640 608 concerne un tableau de commande comprenant notamment un bouton rotatif agissant sur le réglage de la température et un bouton-poussoir de mise en marche du système de chauffage/climatisation. Le bouton-poussoir est logé selon le même axe que le bouton rotatif. Cependant, ce dispositif ne permet pas de visualiser simplement l'état de fonctionnement de l'appareil de chauffage climatisation.

L'invention vise notamment un tableau de commande du genre défini en introduction, et prévoit que le bouton-poussoir est logé dans le bouton rotatif, sensiblement selon l'axe de rotation de celui-ci. Il est guidé dans un alésage axial dudit bouton rotatif, ledit bouton poussoir étant associé à un commutateur à deux états de telle sorte que chaque mouvement d'enfoncement du bouton -poussoir entraîne un changement d'état du commutateur. Des moyens de rappel sont prévus pour ramener le bouton-poussoir à sa position de départ après chaque mouvement d'enfoncement. Il est caractérisé en ce qu'il comprend une première source lumineuse qui émet un signal dans l'un des états du communtateur, et des moyens pour faire apparaître ce signal sur la surface extérieure du bouton-poussoir et en ce qu'il comprend une seconde source lumineuse qui éclaire en permance, à travers un second trajet de conduction de la lumière, un repère situé sur le bouton rotatif et venant en regard de différents symboles fixes en fonction de la position angulaire de celui-ci.

La présence du bouton-poussoir ainsi disposé n'implique aucune augmentation par rapport à 1' encombrement en surface des autres éléments du tableau de commande.

D'autres caractéristiques, complémentaires ou alternatives, du tableau de commande sont énoncées ci-après:

-Lesdits moyens pour faire apparaître le signal comprennent un trajet de conduction de lumière disposé selon l'axe du bouton rotatif et du bouton-poussoir, dont l'extrémité amont est en regard de la première source lumineuse et dont l'extrémité aval est dans la face extrérieure du bouton-poussoir.

Il comprend un paroi opaque séparant l'un de l'autre les premier et second trajets de conduction de lumière.

-L'un au moins des premier et second trajets de conduction de lumière passe par une pièce en matière plastique transparente.

D'autres caractéristiques et avantages de l'invention apparaîtront à l'examen de la description détaillée ci-après, et des dessins annexés, sur lesquels:

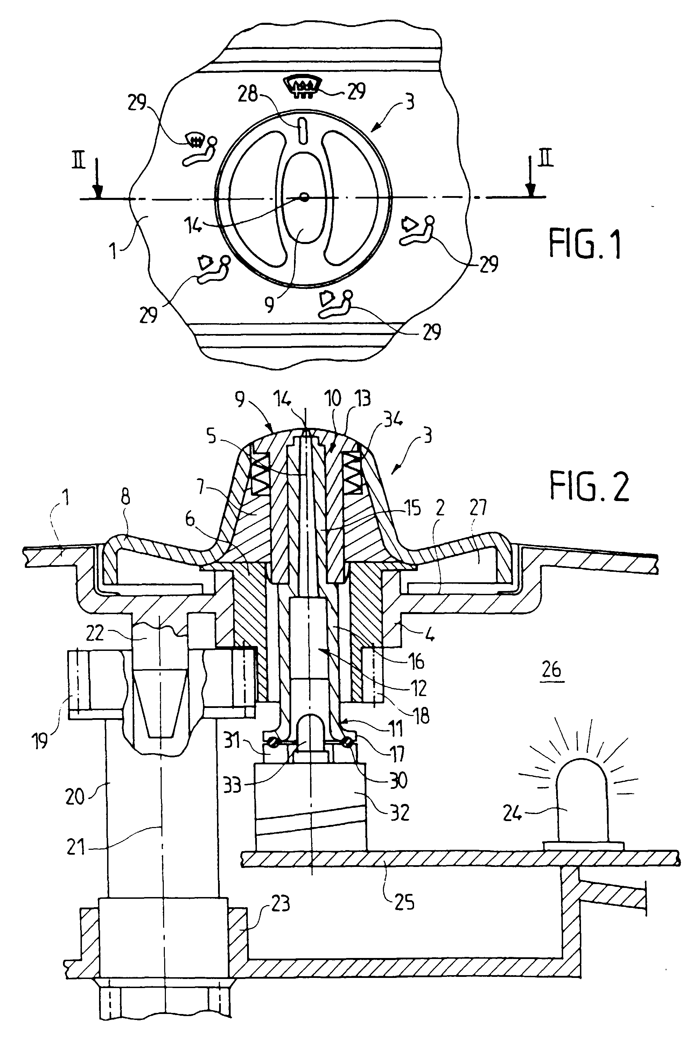

- la figure 1 est une vue partielle de face d'un tableau de commande selon l'invention; et
- la figure 2 est une vue partielle en coupe selon la ligne II-II de la figure 1.

Les dessins montrent un tableau de commande de climatisation de véhicule automobile comprenant un panneau de façade 1 en matière plastique moulée présentant un renfoncement 2 où est logée une partie de l'épaisseur axiale d'un bouton rotatif 3 et définissant un palier 4 pour le guidage en rotation de ce bouton. Celui-ci est moulé en trois parties en trois matières plastiques différentes, toutes trois de forme annulaire entourant l'axe de rotation 5 du bouton 3, à savoir une partie 6 en forme de manchon en polycarbonate transparent, traversant le palier 4, une partie 7 en ABS DAW blanc, également en forme de manchon, située sensiblement dans le prolongement de la partie 6 à l'extérieur du panneau 1, et une partie 8 en ABS noir en forme de jupe recouvrant extérieurement la partie 7 et s'étendant radialement au-delà de celle-ci sensiblement jusqu'au bord périphérique du renfoncement 2.

Un bouton-poussoir 9 est logé dans l'alésage axial du bouton rotatif. Le bouton 9 est également moulé en trois parties en différentes matières plastiques 10, 11 et 12. La partie 10, en polycarbonate peint gratté au laser, est un manchon propre à coulisser dans l'alésage du manchon 7. Son extrémité extérieure, élargie radialement, forme la face visible 13 du bouton-poussoir, qui dans la position de repos de celui-ci vient en affleurement et en raccordement avec la face extérieure de la jupe 8. A cette même extrémité, l'alésage axial du manchon 10 est réduit en diamètre pour former un petit orifice 14 débouchant à l'extérieur. La partie 11 est un tube mince en ABS blanc. Une première région 15 de ce tube est ajustée dans l'alésage axial du manchon 10 et s'étend depuis une petite distance de l'extrémité extérieure de celui-ci jusqu'à son extrémité intérieure. La région 15 est prolongée vers l'intérieur du tableau de commande par une région tubulaire 16 de diamètres intérieur et extérieur supérieurs à ceux de la région 15 et qui se raccorde à son extrémité intérieure à une bride 17 tournée radialement vers l'extérieur. Enfin, la partie 12, en polycarbonate transparent, remplit l'alésage axial du tube 11 sur toute la longueur de la région 15 et sur une fraction de la région 16, adjacente à la précédente.

Le manchon intérieur 6 du bouton-poussoir présente à son extrémité intérieure une denture 18 qui engrène avec une denture 19 d'une pièce 20 de façon que la rotation du bouton 3 entraîne la rotation de la pièce 20 autour d'un axe 21 parallèle à l'axe 5. A cet effet, la pièce 20 est montée à son extrémité tournée vers l'extérieur du tableau de commande sur un tourillon 22 venu de matière sur la face intérieure du panneau 1, et est guidée en rotation, à distance axiale de cette extrémité, dans un palier fixe 23. Cette pièce 20, illustrée seulement en partie, coopère par des moyens non représentés avec un mécanisme d'entraînement de volets de distribution d'air.

Une ampoule électrique 24, alimentée indépendamment des mouvements des boutons 3 et 9, est montée sur la face tournée vers le panneau 1 d'une plaque-support 25 disposée à l'intérieur du tableau de commande, perpendiculairement à l'axe 5. L'ampoule 24 émet des rayons lumineux dans un espace libre 26 dans lequel le manchon 6 fait saillie axialement vers l'intérieur par rapport au palier 4. Ces rayons lumineux traversent la matière transparente du manchon 6 et parviennent dans une zone annulaire 27 située sous la jupe 8, radialement à l'extérieur par rapport aux manchons 6 et 7. La jupe 8 est percée d'un orifice 28 dans sa région périphérique, en une position angulaire définie. Cet orifice permet au conducteur de véhicule de voir la lumière issue de l'ampoule 24 et constitue par conséquent un repère lumineux qui peut être amené en regard de différents symboles figuratifs 29 placés sur le panneau 1 autour du bouton 3. Chacun de ces symboles indique la ou les zones de l'habitacle dans lesquelles les de l'air est envoyé lorsque le repère 28 est en regard du symbole correspondant.

La bride 17 du bouton-poussoir 9 vient en appui, par l'intermédiaire d'un joint en silicone 30, sur l'organe d'actionnement 31 d'un commutateur 32 monté également sur la face extérieure de la plaque 25 et commandant la mise en service et hors service du compresseur de fluide réfrigérant utilisé pour la climatisation de l'habitacle du véhicule. Le commutateur 32, qui est un composant du commerce, est équipé d'une diode électroluminescente 33 qui s'allume lorsque le commutateur commande l'alimentation du compresseur. La diode 33 s'engage dans l'extrémité intérieure du tube 11 et vient donc en regard de l'extrémité intérieure de l'élément transparent 12 du bouton-poussoir. Lors de chaque mouvement d'enfoncement de ce dernier, la bride 17 pousse l'organe d'actionnement 31 et provoque le changement d'état de l'interrupteur 32. En même temps, un ressort annulaire 34 entourant le manchon 10 est comprimé axialement entre l'extrémité évasée de ce dernier et un épaulement de l'alésage axial du manchon 7. Lorsqu'on relâche le bouton-poussoir, le ressort 34 le ramène à sa position de repos. Lorsque la diode 33 est allumée, les rayons qu'elle émet traversent axialement l'élément transparent 12 et sont visibles de l'extérieur à travers l'orifice 14, indiquant au conducteur que le compresseur est en service. Le tube opaque 11 sépare le trajet lumineux de la lampe 24 à l'orifice 28, qui passe à l'extérieur du tube, et le trajet lumineux de la diode 33 à l'orifice 14, qui passe à l'intérieur du tube.

## Revendications

1. Tableau de commande pour dispositif de chauffage/ventilation ou de climatisation de véhicule automobile, comprenant au moins un bouton rotatif (3) pour le réglage d'un paramètre de fonctionnement du dispositif et au moins un bouton-poussoir (9) pour le passage discontinu d'une condition de fonctionnement à une autre, le bouton-poussoir étant logé dans le bouton rotatif, sensiblement selon l'axe de rotation (5) de celui-ci, en étant guidé dans un alésage axial dudit bouton rotatif, ledit bouton-poussoir étant associé à un commutateur à deux états (32) de telle sorte que chaque mouvement d'enfoncement du bouton-poussoir entraîne un changement d'état du commutateur, des moyens de rappel (34) étant prévus pour ramener le boutonpoussoir à sa position de départ après chaque mouvement d'enfoncement,
caractérisé en ce que qu'il comprend une première source lumineuse (33) qui émet un signal dans l'un des états du commutateur, et des moyens (12, 14) pour faire apparaître ce signal sur la face extérieure du bouton-poussoir et en ce qu'il comprend une seconde source lumineuse (24) qui éclaire en permanence, à travers un second trajet de conduction de lumière (6, 27), un repère (28) situé sur le bouton rotatif et venant en regard de différents symboles fixes (29) en fonction de la position angulaire de celui-ci.

2. Tableau de commande selon la revendication 1, caractérisé en ce que lesdits moyens pour faire apparaître le signal comprennent un trajet de conduction de lumière disposé selon l'axe du bouton rotatif et du bouton-poussoir, dont l'extrémité aval est dans la face extérieure du bouton-poussoir.

3. Tableau de commande selon la revendication 1, caractérisé en ce qu'il comprend une paroi opaque (11) séparant l'un de l'autre les premier et second trajets de conduction de lumière.

4. Tableau de commande selon l'une des revendications 1 à 3, caractérisé en ce que l'un au moins des premier et second trajets de conduction de lumière passe par une pièce en matière plastique transparente (6, 12).

## Patentansprüche

1. Steuerpanel für eine Fahrzeug-Heiz-/Belüftungs- oder -Klimaanlage, umfassend zumindest einen Drehknopf (3) zur Einstellung eines Betriebsparameters der Anlage und zumindest einen Druckknopf (9) für den diskontinuierlichen Übergang von einem Funktionsmodus zu einem anderen, wobei der Druckknopf in dem Drehknopf aufgenommen ist, praktisch entlang der Rotationsachse (5) desselben, wobei er in einer axialen Bohrung des Drehknopfes geführt ist, wobei der Drehknopf einem zwei Zustandsschalter (32) in solch einer Weise zugeordnet ist, daß jede Druckbewegung des Druckknopfes eine Veränderung des Zustands des Schalters mit sich bringt, wobei eine Rückholeinrichtung (34) vorgesehen ist, um den Druckknopf nach jeder Druckbewegung in seine Ausgangsposition zurückzuführen, **dadurch gekennzeichnet, daß** eine erste Leuchtquelle (33) vorgesehen ist, die ein Signal in dem einen der Zustände des Schalters emmitiert, so wie eine Einrichtung (12, 14), um dieses Signal an der Außenfläche des Druckknopfes erscheinen zu lassen, und daß eine zweite Leuchtquelle (24) vorgesehen ist, die permanent über einen zweiten Lichtleiterpfad (6, 27) eine Markierung (28) beleuchtet, die an dem Drehknopf angeordnet ist und gegenüberstehend unterschiedlichen feststehenden Symbole (29), abhängig von der winkelmäßigen Position des Drehschalters, gelangt.

2. Steuerpanel nach Anspruch 1, **dadurch gekennzeichnet, daß** die Einrichtung zum Erscheinenlassen, des Signals einen Lichtleiterpfad umfaßt, angeordnet entlang der Achse des Drehknopfes und des Druckknopfes, wobei das flußabwärtsliegende Ende sich an der Außenfläche des Druckknopfes befindet.

3. Steuerpanel nach Anspruch 1, **dadurch gekennzeichnet, daß** eine opake Wandung (11) vorgesehen ist, die den einen von dem anderen der ersten und zweiten Lichtleiterpfade trennt.

4. Steuerpanel nach einem der Ansprüche 1 bis 3, **dadurch gekennzeichnet, daß** zumindest einer der ersten und zweiten Lichtleiterpfade durch ein durchsichtiges Teil (6, 12) aus Kunststoff tritt.

## Claims

1. Control panel for a motor-vehicle heating/ventilation or air-conditioning device, comprising at least one rotary knob (3) for setting an operating parameter of the device and at least one pushbutton (9) for a discontinuous change from one operating condition to another, the pushbutton being housed in the rotary knob, substantially along the axis of rotation (5) thereof, while being guided in an axial bore of the said rotary knob, the said pushbutton being associated with a two-state changeover switch (32) such that each movement of pushing in the pushbutton entails a change of state of the changeover switch, return means (34) being provided for bringing the pushbutton back to its start position after each pushing-in movement, characterised in that it comprises a first light source (33) which emits a signal in one of the states of the changeover switch, and means (12, 14) for making this signal appear on the outer face of the pushbutton, and in that it comprises a second light source (24) which, via a second light-conduction path (6, 27), continuously illuminates a marker (28) situated on the rotary knob and coming opposite various fixed symbols (29) depending on its angular position.

2. Control panel according to Claim 1, characterised in that the said means for making the signal appear comprise a light-conduction path arranged along the axis of the rotary knob and of the pushbutton, the downstream extremity of which is in the outer face of the pushbutton.

3. Control panel according to Claim 1, characterised in that it comprises an opaque wall (11) separating the first and second light-conduction paths from one another.

4. Control panel according to one of Claims 1 to 3, characterised in that at least one of the first and second light-conduction paths passes through a component made of transparent plastic (6, 12).
